# EUROPÄISCHE PATENTSCHRIFT

(11) **EP 1 843 096 B1**
(45) Veröffentlichungstag und Bekanntmachung des Hinweises auf die Patenterteilung: **08.05.2019**
(21) Anmeldenummer: 07005196.6
(22) Anmeldetag: 13.03.2007
(51) Int. Cl.: B60H 1/22, F23N 1/08, F23N 5/00

(54) **Verfahren zum Betreiben eines brennstoffbetriebenen Fahrzeugheizgerätes**
Method for operating a fuel driven vehicle heating device
Procédé de fonctionnement d'un appareil de chauffage à combustible d'un véhicule

(30) Priorität: 04.04.2006 DE 102006015771
(43) Veröffentlichungstag der Anmeldung: 10.10.2007
(73) Patentinhaber: Eberspächer Climate Control Systems GmbH & Co. KG, 73730 Esslingen (DE)
(72) Erfinder: Eberspach, Günter, 72649 Wolfschlugen (DE)
(74) Vertreter: Ruttensperger Lachnit Trossin Gomoll

(56) Entgegenhaltungen:
- EP-A- 0 827 854
- EP-A- 1 375 214
- DE-A1- 10 143 459
- DE-A1- 19 929 891
- DE-C1- 10 144 406
- DE-U1- 9 421 866

## Beschreibung

Die vorliegende Erfindung betrifft ein Verfahren zum Betreiben eines brennstoffbetriebenen Fahrzeugheizgerätes, welches beispielsweise als Zuheizer oder Standheizung in einem Kraftfahrzeug eingesetzt wird.

Derartige brennstoffbetriebene Heizgeräte werden im Allgemeinen mit dem gleichen Brennstoff betrieben, der auch in einer Brennkraftmaschine eines Fahrzeugs verbrannt wird. Auf diese Art und Weise wird es möglich, aus nur einem Kraftstofftank zwei brennstoffbetriebene Systembereiche, nämlich die Brennkraftmaschine und das Fahrzeugheizgerät, zu speisen. Aus Kostengründen und auch zur Reduzierung der Schadstoffanteile in den Verbrennungsabgasen eines derartigen brennstoffbetriebenen Fahrzeugheizgerätes findet zunehmend die Verwendung anderer, umweltverträglicher Brennstoffe oder eine Mischung derartiger anderer Brennstoffe mit den in einem Kraftfahrzeug herkömmlicherweise eingesetzten Brennstoffen Anwendung. So kann beispielsweise ein Gemisch von Ethanol und Benzin mit 85% Ethanol und 15% Benzin Anwendung finden. Auch andere Mischungsverhältnisse bzw. andere dem herkömmlichen Kraftstoff beizumengende Zusatzstoffe können Anwendung finden.

Ein Problem bei der Verwendung derartiger Brennstoffe oder Brennstoffgemische für Fahrzeugheizgeräte liegt darin, dass möglicherweise auch regional verschieden unterschiedliche Gemischzusammensetzungen und unterschiedliche Gemischverhältnisse Anwendung finden. Da die für den eingesetzten Brennstoff verwendeten Ausgangsstoffe, wie zum Beispiel Benzin einerseits und Ethanol andererseits, unterschiedliche Brennwerte aufweisen, also bei Verbrennung unterschiedliche Energiemengen liefern, hat die bei derartigen Heizgeräten im Allgemeinen vorgesehene Vorgehensweise, dass zur Bereitstellung bestimmter Heizstufen vorgegebene Brennstoffmengen im Verhältnis zu vorgegebenen Verbrennungsluftmengen eingespeist werden, zur Folge, dass variierende Brennwerte des eingesetzten Brennstoffs entsprechend variierende Wärmemengen und somit auch Heizleistungen des so betriebenen Fahrzeugheizgerätes mit sich bringen.

Die DE 101 44 406 C1 offenbart ein Heizgerät, bei welchem unter Miteinbeziehung des Ausgangssignals eines Verbrennungsgütesensors, insbesondere eines CO-Sensors, eine Anpassung der Verbrennungsluftzuführmenge oder der Brennstoffzuführmenge erfolgt. In Abhängigkeit davon, ob der CO-Wert über oder unter einem Sollwert ist und ob die auf der Grundlage einer Abgastemperatur bestimmte Heizleistung über oder unter einem Sollwert ist, wird entweder die Förderleistung eines Verbrennungsluftgebläses erhöht oder verringert oder die Förderleistung einer Brennstoffpumpe erhöht oder verringert. Auf diese Art und Weise kann sichergestellt werden, dass eine durch die Abgaszusammensetzung indizierte gleich bleibende Güte der Verbrennung erreicht wird.

Die EP 0 827 854 A2 offenbart ein Verfahren zum Betreiben eines Fahrzeug-Heizgeräts, bei welchem die Verbrennungsluftzuführmenge und die Brennstoffzuführmenge zur Erlangung eines optimalen gleichmäßigen Verbrennungszustandes des Heizgeräts unter Berücksichtigung eines durch einen Abgassensor erfassten Abgaswertes eingestellt werden. Der Abgassensor kann beispielsweise dazu ausgebildet sein, den CO-Wert, den CO₂-Wert oder den O₂-Wert zu erfassen.

Die DE 94 21 866 U1 offenbart ein Fahrzeugheizgerät, bei welchem unter Berücksichtigung des Ausgangssignals eines Verbrennungsgütesensors, also beispielsweise CO₂-Sensor, das Verbrennungsluftgebläse und/oder eine Brennstoffzuführeinrichtung geregelt werden, um für eine gleich bleibende Verbrennungsgüte, beispielsweise mit einem CO₂-Gehalt von 14,4% im Abgas zu gewährleisten.

Die EP 1 375 214 A1 offenbart ein Verfahren, mit welchem ein Temperatur-Istwert beispielsweise eines Wärmeträgermediums oder in einem Innenraum unter Berücksichtigung in zeitlicher Abfolge erfasster Messwerte ermittelt wird, so dass kurzzeitige, möglicherweise durch Messfehler oder kurzzeitige Fluktuationen induzierte Messwertschwankungen bei der Bestimmung des Istwertes eliminiert werden.

Die DE 101 43 459 A1 offenbart ein Verfahren zum Betreiben eines Fahrzeugheizgeräts, bei welchem die Temperatur in der Umgebung des Fahrzeugheizgeräts, also auch die Temperatur der zur Verbrennung bereitzustellenden Luft, und die Temperatur des in das Heizgerät einzuspeisenden Brennstoffs erfasst werden und bei der Bestimmung der bereitzustellenden Verbrennungsluftmenge und Brennstoffmenge berücksichtigt werden.

Die DE 199 29 891 A1 offenbart ein Verfahren zum Betreiben eines Fahrzeugheizgeräts, bei welchem die Brennstoffmenge und die Verbrennungsluftmenge beruhend auf der Verbrennungslufttemperatur und dem Verbrennungsluftdruck bestimmt werden.

Es ist die Aufgabe der vorliegenden Erfindung, ein Verfahren zum Betreiben eines brennstoffbetriebenen Fahrzeugheizgerätes bereitzustellen, mit welchem in einfacher und zuverlässig wirkender Art und Weise eine Beeinflussung des Betriebsverhaltens durch den Einsatz verschiedener Brennstoffe vermieden werden kann.

Erfindungsgemäß wird diese Aufgabe gelöst durch ein Verfahren gemäß Anspruch 1 zum Betreiben eines brennstoffbetriebenen Fahrzeugheizgerätes, welches Fahrzeugheizgerät einen Brennerbereich und eine unter Ansteuerung einer Ansteuervorrichtung stehende Brennstoffzufuhranordnung zum Zuführen von Brennstoff zu dem Brennerbereich sowie eine unter der Ansteuerung der Ansteuervorrichtung stehende Verbrennungsluftzuführanordnung zum Zuführen von Verbrennungsluft zu dem Brennerbereich umfasst. Das Verfahren umfasst die Maßnahmen:
a) in Abhängigkeit von einer für den Verbrennungsbetrieb vorgegebenen Heizleistungsstufe, Vorgeben einer Brennstoffzuführmenge und einer Verbrennungsluftzuführmenge und Zuführen von Brennstoff mit der vorgegebenen Brennstoffzuführmenge und Verbrennungsluft mit der vorgegebenen Verbrennungsluftzuführmenge zur Verbrennung in dem Brennerbereich,
b) Ermitteln einer im Zusammenhang mit einer Verbrennungstemperatur der im Brennerbereich ablaufenden Verbrennung stehenden Temperaturgröße,
c) Vergleichen der Temperaturgröße mit einer Referenz-Temperaturgröße, wobei die Referenz-Temperaturgröße im Zusammenhang steht mit einer für die vorgegebene Heizleistungsstufe zu erwartenden Temperatur,
d) dann, wenn die Temperaturgröße von der Referenz-Temperaturgröße abweicht, Verändern der Brennstoffzuführmenge und in Entsprechung dazu der Verbrennungsluftzuführmenge derart, dass die Abweichung der Temperaturgröße von der Referenz-Temperaturgröße abnimmt.

Bei dem erfindungsgemäßen Verfahren wird bei ablaufender Verbrennung die Wärmeentwicklung beobachtet. Wird festgestellt, dass diese nicht so ist, wie sie im Zusammenhang mit einer bestimmten grundsätzlich vorgegebenen Brennstoffzuführmenge sein sollte, was bei grundsätzlich korrekt arbeitender Brennstoffzufuhr damit zusammenhängen kann bzw. zusammenhängen wird, dass nicht ausreichend Verbrennungswärme oder ggf. ein Übermaß an Verbrennungswärme erzeugt wird, so wird dieser ungewünschten Entwicklung erfindungsgemäß dadurch entgegengewirkt, dass die Brennstoffzufuhrmenge angepasst wird. Wird festgestellt, dass die beobachtete Temperatur bzw. die diese Temperatur repräsentierende Temperaturgröße zu niedrig ist, was eine zu geringe Verbrennungswärmemenge bzw. Heizleistung indiziert, so wird die Brennstoffzuführmenge erhöht; wird eine zu hohe Temperatur erkannt, so wird entsprechend darauf geschlossen, dass aus der eingespeisten Brennstoffzuführmenge zu viel Wärmeenergie gewonnen werden kann, mit der Folge, dass die Brennstoffzufuhr gedrosselt wird. Bei dem erfindungsgemäßen Verfahren kann als Temperaturgröße die Temperatur eines durch das Fahrzeugheizgerät zu erwärmenden Mediums verwendet werden. Das zu erwärmende Medium, als beispielsweise die in einen Fahrzeuginnenraum einzuleitende Luft oder das in einem Kühlmittelkreislauf zirkulierende flüssige Medium, nimmt im Verbrennungsbetrieb die oder einen Teil der in den Verbrennungsabgasen transportierten Wärme auf. Die Erwärmung dieses Mediums steht also in direktem Zusammenhang mit der in den Verbrennungsabgasen transportierten Wärmemenge bzw. auch der Temperatur der Verbrennungsabgase, so dass bei einer Abweichung der Temperatur dieses Mediums von der an sich bei der mit einer bestimmten Leistungsstufe ablaufenden Verbrennung zu erwartenden Temperatur, auf eine veränderte Brennstoffcharakteristik geschlossen werden kann und dementsprechend Anpassungsmaßnahmen bei der Brennstoffzufuhr vorgenommen werden können.

Alternativ kann als Temperaturgröße die Temperatur eines aus dem Brennerbereich austretenden Verbrennungsabgasstroms verwendet werden. Während bei der vorangehenden Vorgehensweise die allgemein ohnehin vorgesehene Sensorik zur Erfassung der Temperatur des zu erwärmenden Mediums genutzt werden kann, kann gemäß dieser Alternative oder ggf. auch zusätzlich zu der vorangehend beschriebenen Maßnahme also direkt die Temperatur der Verbrennungsabgase erfasst werden, beispielsweise durch einen im Abgasstrom vorhandenen Sensor, was einen direkten und auch sehr schnellen Rückschluss auf die Charakteristik der ablaufenden Verbrennung zulässt und entsprechend schnell die Einleitung von möglicherweise erforderlichen Gegenmaßnahmen gestattet.

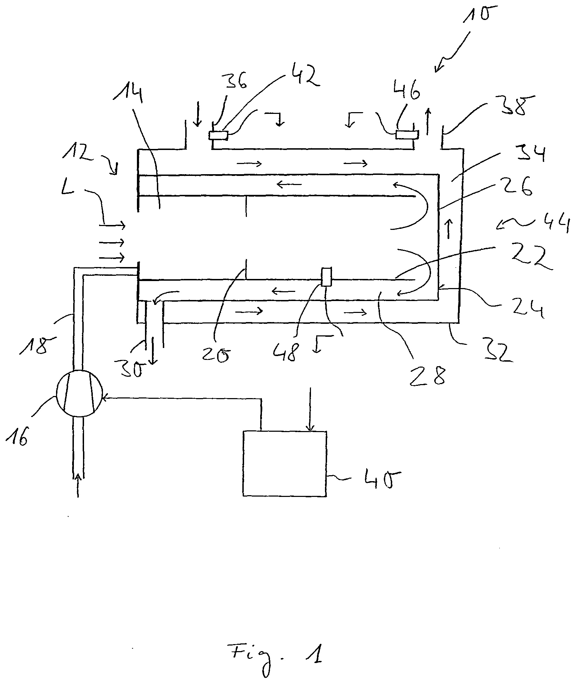

Die vorliegende Erfindung wird nachfolgend mit Bezug auf die beiliegende Fig. 1 detailliert beschrieben, welche den prinzipiellen Aufbau eines Fahrzeugheizgeräts darstellt, bei dem die erfindungsgemäße Vorgehensweise durchgeführt werden kann.

Das in Fig. 1 dargestellte Fahrzeugheizgerät 10 umfasst einen allgemein mit 12 bezeichneten Brennerbereich. In eine Brennkammer 14 dieses Brennerbereichs 12 wird, wie durch Pfeile L angedeutet, durch ein nicht weiter gezeigtesGebläse Verbrennungsluft eingeleitet. Durch eine Brennstoffförderpumpe, beispielsweise eine Dosierpumpe 16, wird über eine Brennstoffzuführleitung 18 zunächst flüssiger Brennstoff in Richtung zur Brennkammer 14 geleitet. Dieser Brennstoff kann entweder durch Zerstäubung oder durch Verdampfung in sehr fein verteilter Form in der Brennkammer 14 bereitgestellt werden, so dass nach Durchmischung mit der Verbrennungsluft L ein verbrennungsfähiges Gemisch aus Brennstoff und Luft erzeugt wird. Diese Verbrennung kann durch ein nicht dargestelltes Zündorgan gestartet werden, wobei dann bei gestarteter bzw. ablaufender Verbrennung entstehende Verbrennungsabgase durch eine Flammblende 20 aus der Brennkammer 14 austreten und entlang der Innenseite eines Flammrohrs 22 strömen. Dieses Flammrohr 22 ist umgeben von einem inneren Wärmetauschergehäuse 24, das im Wesentlichen topfartig
ausgebildet ist und mit einem Bodenbereich 26 der Öffnung des Flammrohrs 22 gegenüberliegt. Zwischen dem Flammrohr 22 und diesem inneren Wärmetauschergehäuse 24 ist ein Abgasströmungsraum 28 gebildet, entlang welchem die Verbrennungsabgase in Richtung zu einem Abgasauslass 30 strömen. Zwischen dem inneren Wärmetauschergehäuse 24 und einem äußeren Wärmetauschergehäuse 32 ist in dem dargestellten Beispiel eines Wasserheizgerätes ein Strömungsraum 34 für das zu erwärmende Wasser gebildet. Im Falle eines Luftheizgerätes wäre das innere Wärmetauschergehäuse 24 durch die zu erwärmende Luft umströmbar. Über einen Einlass 36 tritt das zu erwärmende Wasser in den Strömungsraum 34 ein, umströmt in diesem Strömungsraum 34 das innere Wärmetauschergehäuse 24 und tritt dann nach Erwärmung an einem Auslass 38 aus dem Strömungsraum 34 aus. Durch die thermische Wechselwirkung der Verbrennungsabgase mit dem inneren Wärmetauschergehäuse 24 einerseits und die thermische Wechselwirkung dieses inneren Wärmetauschergehäuses 24 mit dem zu erwärmenden Wasser andererseits wird zumindest ein Teil der in den Verbrennungsabgasen transportierten Wärme auf das Wasser übertragen, so dass dessen Temperatur zwischen dem Einlass 36 und dem Auslass 38 zunehmen wird.

Die verschiedenen zur Einstellung des Betriebs des Fahrzeugheizgerätes 10 erforderlichen Systembereiche, wie zum Beispiel die Dosierpumpe 16, das nicht dargestellte Luftfördergebläse, ein ebenfalls nicht dargestelltes Zündorgan und möglicherweise auch eine hier nicht dargestellte Wasserpumpe für das zu erwärmende Wasser, stehen unter der Ansteuerung einer Ansteuervorrichtung 40. Diese erzeugt entsprechend dem erforderlichen Betrieb Ansteuerbefehle für diese verschiedenen Systembereiche. Beispielsweise steuert die Ansteuervorrichtung 40 die Dosierpumpe 16 so an, dass diese eine gewünschte und im Zusammenhang mit einer einzustellenden Heizstufe erforderliche Brennstoffzuführmenge in Richtung Brennkammer 14 speist. Diesen Betrieb der verschiedenen anzusteuernden Systembereiche steuert bzw. regelt die Ansteuervorrichtung 40 auch unter Berücksichtigung verschiedener Eingaben. Beispielsweise kann ein Einlasstemperatursensor 42 die Temperatur des zu erwärmenden Mediums, hier des Wassers, am Eintrittsbereich der Wärmetauscheranordnung 44 erfassen bzw. ein mit dieser Temperatur in Zusammenhang stehendes Signal ausgeben und in Richtung Ansteuervorrichtung 40 speisen. Am Auslass 38 kann ein Temperatursensor 46 vorgesehen sein, der die Temperatur des zu erwärmenden Mediums am Auslass der Wärmetauscheranordnung 44 erfasst bzw. ein in Zusammenhang mit dieser Temperatur stehendes Signal zur Ansteuervorrichtung 40 liefert. Weiter kann im Abgasstrom, beispielsweise am Flammrohr 22, ein Abgastemperatursensor 48 vorgesehen sein, der ein mit der Temperatur der Verbrennungsabgase in Zusammenhang stehendes Signal bzw. ein diese Temperatur wiedergebendes Signal in Richtung zur Ansteuervorrichtung 40 leitet.

Wird beispielsweise ein derartiges Fahrzeugheizgerät 10 als Standheizung betrieben, und wird weiterhin erfasst, dass auf Grund sehr niedriger Außentemperaturen eine vergleichsweise große Heizleistung erforderlich sein wird, so wird durch die Ansteuervorrichtung 40 durch entsprechende Ansteuerung der verschiedenen Systembereiche, insbesondere der Dosierpumpe 16 und des Verbrennungsluftgebläses, eine im Zusammenhang mit einer vorgegebenen bzw. einzustellenden Heizstufe stehende Gemischmenge in der Brennkammer 14 bereitgestellt. Dabei wird grundsätzlich unterstellt, dass diese Gemischmenge, die eine bestimmte Brennstoffzuführmenge und eine bestimmte Verbrennungsluftzuführmenge erfordert, bei ablaufender Verbrennung zu einer bestimmten in den Verbrennungsabgasen transportierten und in gewissem Anteil auch auf das zu erwärmende Medium übertragenen Wärmeenergiemenge führt, mithin also eine bestimmte Heizleistung des Fahrzeugheizgeräts 10 erlangt werden kann. Ändert sich jedoch die Qualität des eingesetzten Brennstoffs, beispielsweise durch die Zumengung oder alleinige Verwendung von Ethanol als Brennstoff, hat dies auf Grund eines veränderten Brennwertes des dann eingesetzten Brennstoffs, im beschriebenen Falle eines verminderten Brennwertes im Vergleich zur Verbrennung von ausschließlich Benzin, zur Folge, dass bei gleicher Brennstoffzuführmenge und auch gleich gehaltener Verbrennungsluftzuführmenge eine veränderte Wärmemenge bei der Verbrennung entsteht. Dies bedeutet, dass möglicherweise nicht mehr ausreichend Wärmeenergie bereitgestellt werden kann, um das zu erwärmende Medium, also beispielsweise das Wasser oder Luft, ausreichend zu erwärmen.

Diesem Problem wird erfindungsgemäß dadurch entgegengetreten, dass die der Ansteuervorrichtung 40 zugeführte Temperaturinformation ausgewertet wird, um auf diese Art und Weise zu erkennen, ob in verschiedenen Systembereichen die bei einer bestimmten vorgegebenen Heizstufe zu erwartenden Temperaturen eingestellt werden können. Beispielsweise kann hier das Signal des Temperatursensors 46 ausgewertet werden, indem es bzw. die dadurch repräsentierte Temperatur verglichen wird mit einer Referenz-Temperatur oder einem Referenz-Temperaturbereich. Liegt die Temperatur des erwärmten Mediums am Auslass 38 nicht bei einem an sich zu erwartenden Wert oder in einem an sich zu erwartenden Wertebereich, so ist dies bei korrekter Funktion der Brennstoffzufuhr und der Verbrennungsluftzufuhr ein Indikator dafür, dass Brennstoff mit verändertem, beispielsweise geringerem Brennwert eingesetzt wird. Erfindungsgemäß wird dies kompensiert dadurch, dass dann auch die Brennstoffzuführmenge angepasst wird, d.h. bei unter der erwarteten Temperatur liegender erfasster Temperatur erhöht wird und entsprechend auch die Verbrennungsluftzuführmenge angepasst wird. Ein beispielsweise geringerer Brennwert des eingespeisten Brennstoffs kann dann durch eine höhere Brennstoffzuführmenge kompensiert werden.

Um bei dieser Vorgehensweise berücksichtigen zu können, dass die Temperatur der erwärmten Flüssigkeit bzw. des zu erwärmenden Mediums am Austritt der Wärmetauscheranordnung 44 selbstverständlich auch abhängen wird von der Temperatur am Einlass 36, kann auch das Ausgangssignal des Temperatursensors 42 ausgewertet werden, so dass mittels der Differenz der durch diese beiden Signale repräsentierten Temperaturen darauf geschlossen werden kann, welche Wärmemenge auf das zu erwärmende Medium übertragen worden ist. Indiziert das Verhältnis der Temperaturen, dass eine zu geringe Wärmemenge übertragen worden ist, so kann, wie vorangehend bereits dargelegt, eine Erhöhung der Brennstoffzuführmenge vorgenommen werden. Dies kann auch unter der Berücksichtigung der Strömungsgeschwindigkeit bzw. des Durchsatzes des zu erwärmenden Mediums erfolgen, da bei höherem Durchsatz der auf eine bestimmte Menge des zu erwärmenden Mediums übertragene Energieanteil und somit auch dessen Temperaturanstieg abnehmen wird. Von Bedeutung ist hier also, dass eine beim Durchströmen des Wärmetauscherbereichs 44 durch das zu erwärmende Medium eine in Zusammenhang mit dem Energieübertrag auf dieses Medium stehende Größe ermittelt werden kann, die dann als Indikator für die bei der Verbrennung erzeugte Wärmemenge genutzt wird. Hier müssen nicht notwendigerweise die in Fig. 1 dargestellten am Einlass 36 bzw. am Auslass 46 angeordneten Temperatursensoren eingesetzt werden. Auch andere Positionierungen dieser Temperatursensoren, die die Bereitstellung eines Temperaturdifferenzwertes ermöglichen, der wiederum in Zusammenhang steht mit der Erwärmung des Mediums, sind möglich.

Bei einer weiteren erfindungsgemäßen Vorgehensweise ist es möglich, nicht indirekt durch Beobachtung der Temperatur im Bereich des zu erwärmenden Mediums auf die Charakteristik des ablaufenden Verbrennungsvorgangs zu schließen, sondern hierfür das Signal des Abgastemperatursensors 48 zu nutzen. Dieses steht in direktem Zusammenhang mit der Temperatur der Abgase, also auch der in diesen Abgasen transportierten Wärmemenge. Ist die Temperatur zu niedrig, kann dies wieder als Indikator dafür genutzt werden, dass bei der in der Brennkammer 14 ablaufenden Verbrennung nicht ausreichend Wärmeenergie bereitgestellt werden kann, mit der Folge, dass entsprechend eine Anpassung der Brennstoffzuführmenge der Verbrennungslufzuführmenge vorgenommen werden kann.

Mit der erfindungsgemäßen Vorgehensweise wird es möglich, in einfacher Art und Weise durch den Einsatz im Allgemeinen ohnehin vorhandener Sensoren auf die Charakteristik der ablaufenden Verbrennung und somit auch die Qualität des eingesetzten Brennstoffs zu schließen. Die so gewonnene Information kann dazu genutzt werden, die für eine bestimmte Heizungsstufe an sich vorzusehende Heizleistung auch dann sicherzustellen, wenn beispielsweise durch die Beimengung oder Vermischung verschiedener Brennstoffarten eine deutliche Veränderung im Brennwert des zur Brennkammer 14 geleiteten Brennstoffs erzeugt wird.

## Patentansprüche

1. Verfahren zum Betreiben eines brennstoffbetriebenen Fahrzeugheizgerätes in einer vorgegebenen Heizleistungsstufe, welches Fahrzeugheizgerät einen Brennerbereich (12), eine Wärmetauscheranordnung (44) mit einem Einlass (36) und einem Auslass (38) für zu erwärmendes Medium und eine unter Ansteuerung einer Ansteuervorrichtung (40) stehende Brennstoffzufuhranordnung (16) zum Zuführen von Brennstoff zu dem Brennerbereich (12) sowie eine unter der Ansteuerung der Ansteuervorrichtung (40) stehende Verbrennungsluftzuführanordnung zum Zuführen von Verbrennungsluft zu dem Brennerbereich (12) umfasst, wobei das Verfahren die Maßnahmen umfasst:
a) in Abhängigkeit von einer für den Verbrennungsbetrieb vorgegebenen Heizleistungsstufe, Vorgeben einer Brennstoffzuführmenge und einer Verbrennungsluftzuführmenge und Zuführen von Brennstoff mit der vorgegebenen Brennstoffzuführmenge und Verbrennungsluft mit der vorgegebenen Verbrennungsluftzuführmenge zur Verbrennung in dem Brennerbereich (12),
b) Ermitteln einer im Zusammenhang mit einer Verbrennungstemperatur der im Brennerbereich (12) ablaufenden Verbrennung stehenden Temperaturgröße, wobei als Temperaturgröße die Temperatur eines durch das Fahrzeugheizgerät (10) zu erwärmenden Mediums verwendet oder die Temperatur eines aus dem Brennerbereich (12) austretenden Verbrennungsabgasstroms verwendet wird,
c) zum Verringern einer Abweichung der Temperaturgröße von einer Referenz-Temperaturgröße, wobei die Referenz-Temperaturgröße im Zusammenhang steht mit einer für die vorgegebene Heizleistungsstufe zu erwartenden Temperatur, Vergleichen der Temperaturgröße mit der Referenz-Temperaturgröße, und dann, wenn die Temperaturgröße größer ist als die Referenz-Temperaturgröße, Verringern der Brennstoffzuführmenge und in Entsprechung dazu der Verbrennungsluftzuführmenge, und dann, wenn die Temperaturgröße kleiner ist als die Referenz-Temperaturgröße, Erhöhen der Brennstoffzuführmenge und in Entsprechung dazu der Verbrennungsluftzuführmenge.

2. Verfahren nach Anspruch 1,
**dadurch gekennzeichnet, dass** die Temperatur des zu erwärmenden Mediums am Einlass (36) und am Auslass (38) erfasst wird und dass die Temperaturgröße als Differenz zwischen der Temperatur am Auslass (38) und am Einlass (36) ermittelt wird.

3. Verfahren nach Anspruch 2,
**dadurch gekennzeichnet, dass** die Temperaturgröße ferner in Abhängigkeit vom Wärmeträgermediumdurchsatz der Wärmetauscheranordnung (44) ermittelt wird.

## Claims

1. Method for operating a fuel operated vehicle heating device in a predetermined heating performance level, the vehicle heating device comprising a burner section (12), a heat exchanger arrangement (44) with an inlet (36) and an outlet (38) for a medium to be heated and a fuel supply arrangement (16) controlled by a control device (40) for supplying fuel to the burner section (12), as well as a combustion air supply arrangement controlled by the control device (40) for supplying combustion air to the burner section (12), wherein the method comprises the following steps:
a) predefining a fuel supply volume and a combustion air supply volume and supplying fuel with the predefined fuel supply volume and combustion air with the predefined combustion air supply volume depending on a heating performance level predetermined for the heating operation for combustion in the burner section (12),
b) determining a temperature parameter depending on a combustion temperature of the combustion taking place in the burner section (12), wherein the temperature of a medium to be heated by the vehicle heating device (10) or the temperature of a combustion exhaust gas flow leaving the burner section (12) is used as the temperature parameter,
c) for reducing a deviation of the temperature parameter from a reference temperature parameter, wherein the reference temperature parameter is associated to a temperature to be expected for the predefined heating performance level, comparing the temperature parameter to the reference temperature parameter and when the temperature parameter is above the reference temperature parameter reducing the fuel supply volume and accordingly the combustion air supply volume, and when the temperature parameter is below the reference temperature parameter, increasing the fuel supply volume and accordingly the combustion air supply volume.

2. Method according to claim 1,
**characterized in that** the temperature of the medium to be heated is detected at the inlet (36) and at the outlet (38) and **in that** the temperature parameter is determined as the difference between the temperature at the outlet (38) and the temperature at the inlet (36).

3. Method according to claim 2,
**characterized in that** the temperature parameter is further determined depending on the heat carrier medium flow in the heat exchanger arrangement (44).

## Revendications

1. Un procédé pour opérer un appareil de chauffage pour un véhicule utilisant du combustible dans un niveau de puissance de chauffage prédéterminé, l'appareil de chauffage de véhicule comprenant une section de brûleur (12), un arrangement d'échangeur de chaleur (44) avec une entrée (36) et une sortie (38) pour un médium à chauffer et un dispositif d'alimentation en combustible (16) commandé par un dispositif de commande (40) pour fournir du combustible à la section de brûleur (12) ainsi qu'un dispositif d'alimentation en air de combustion commandé par le dispositif de commande (40) pour fournir de l'air de combustion à la section de brûleur (12), le procédé comprenant les étapes suivantes :
a) en fonction d'un niveau de puissance de chauffage prédéfini pour l'opération de combustion, définir un volume d'alimentation de combustible et un volume d'alimentation d'air de combustion et fournir du combustible avec le volume d'alimentation de combustible prédéfini et de l'air de combustion avec le volume d'alimentation d'air de combustion prédéfini pour la combustion dans la section de brûleur (12),
b) déterminer un paramètre de température associé à une température de combustion de la combustion effectuée dans la section de brûleur (12), la température d'un médium à chauffer par l'appareil de chauffage de véhicule (10) ou la température d'un flux de gaz d'échappement quittant la section de brûleur (12) étant utilisées en tant que paramètre de température,
c) pour réduire la déviation du paramètre de température d'un paramètre de température de référence, où le paramètre de température de référence dépend de la température attendue pour le niveau de puissance de chauffage, comparer le paramètre de température au paramètre de température de référence, et, lorsque le paramètre de température est plus grand que le paramètre de température de référence, réduire le volume d'alimentation de combustible et en correspondance le volume d'alimentation d'air de combustion, et, lorsque le paramètre de température est plus petit que le paramètre de température de référence, augmenter le volume d'alimentation de combustible et en correspondance le volume d'alimentation d'air de combustion.

2. Procédé selon la revendication 1,
**caractérisé en ce que** la température du médium à chauffer est détectée à l'entrée (36) et à la sortie (38) et **en ce que** le paramètre de température est déterminée sous forme d'une différence entre la température à la sortie (38) et à l'entrée (36).

3. Procédé selon la revendication 2,
**caractérisé en ce que** le paramètre de température est en outre déterminé en fonction du volume de médium caloporteur de l'arrangement d'échangeur de chaleur (44).
